(19) Europäisches Patentamt

European Patent Office

Office européen des brevets

(11) Veröffentlichungsnummer: **0 238 901 B1**

(12) **EUROPÄISCHE PATENTSCHRIFT**

(45) Veröffentlichungstag der Patentschrift: **19.06.91**

(21) Anmeldenummer: **87103033.4**

(22) Anmeldetag: **04.03.87**

(51) Int. Cl.5: **F16L 58/00, F16L 58/06, F16L 57/00, F16L 58/10**

(54) **Metallrohr, insbesondere Stahlrohr, mit einem Korrosionsschutzüberzug und einem Schutzmantel.**

(30) Priorität: **07.03.86 DE 3607459**

(43) Veröffentlichungstag der Anmeldung:
**30.09.87 Patentblatt 87/40**

(45) Bekanntmachung des Hinweises auf die
Patenterteilung:
**19.06.91 Patentblatt 91/25**

(84) Benannte Vertragsstaaten:
**AT BE CH ES FR GB GR IT LI LU NL SE**

(56) Entgegenhaltungen:
EP-A- 0 026 844        EP-A- 0 138 742
EP-A- 0 153 816        DD-A- 115 192
DE-A- 3 041 973        DE-A- 3 311 893
DE-A- 3 512 528        GB-A- 2 101 499
US-A- 1 544 592        US-A- 2 077 140

(73) Patentinhaber: **ECI- European Chemical Industries Ltd.**
**Killycard**
**Castleblayney County Monaghan(IE)**

Patentinhaber: **Hoesch Aktiengesellschaft**
**Eberhardstrasse 12**
**W-4600 Dortmund 1(DE)**

(72) Erfinder: **Kleen, Eugen, Dipl.-Min.**
**An der Martin-Luther-Schule 4**
**W-4250 Bottrop(DE)**
Erfinder: **Müller, Claus M., Dipl.-Chem. Dr.-Ing.**
**Quellenblick 4**
**W-4300 Essen 1(DE)**

(74) Vertreter: **Honke, Manfred, Dr. et al**
**Patentanwälte Andrejewski, Honke & Partner**
**Theaterplatz 3 Postfach 10 02 54**
**W-4300 Essen 1(DE)**

**Beschreibung**

Die Erfindung betrifft ein Metallrohr, insbesondere Stahlrohr, mit einem Korrosionsschutzüberzug aus Kunststoff und einem Schutzmantel dafür aus einer Beton- oder Mörtelmischung gegen mechanische Beschädigungen des Korrosionsschutzüberzuges, bei dem der Korrosionsschutzüberzug Profilierungen für einen formschlüssigen Verbund zwischen dem Korrosionsschutzüberzug und dem Schutzmantel aufweist.

Bei freiverlegten, erdverlegten und unter Wasser verlegten Stahlrohren hat sich eine Ummantelung aus Kunststoff im Hinblick auf den erforderlichen Korrosionsschutz der Stahloberflächen bewährt. Für die Ummantelung bzw. als Korrosionsschutzüberzug finden bevorzugt Epoxidharz, Polyäthylen und Polyurethan Verwendung. Ein besonderes Problem besteht jedoch darin, daß der verhältnismäßig dünne Korrosionsschutzüberzug gegen mechanische Beschädigungen beim Transport und Verlegen der Stahlrohre empfindlich ist. Folglich hat man den Korrosionsschutzüberzug zusätzlich mit einem Schutzmantel gegen mechanische Beschädigungen umhüllt. Dieser Schutzmantel besteht regelmäßig aus einer Beton- oder Mörtelmischung, die auch faserarmiert oder kunststoffvergütet sein kann. Allerdings bereitet die Applikation einer solchen Beton- oder Mörtelmischung auf die Außenfläche des Kunststoffüberzuges Schwierigkeiten. Tatsächlich ist die Haftung von Beton- oder Mörtelmischungen auf Kunststoff unbefriedigend. Das gilt insbesondere dann, wenn die Stahlrohre erst nachträglich auf der Baustelle gebogen werden. Der aus einer Beton- oder Mörtelmischung bestehende Schutzmantel ist naturgemäß verhältnismäßig starr und baut beim Biegen der Stahlrohre an der Verbundstelle gegenüber dem biegeelastischen Stahlrohr mit dem verhältnismäßig dünnen Korrosionsschutzüberzug derart hohe Spannungen auf, daß einerseits Risse in dem Schutzmantel, andererseits schalenförmige Abplatzungen entstehen können. Die Probleme um die unbefriedigende Haftung des Schutzmantels haben auch die Verwendung von Klebemitteln zwischen dem Korrosionsschutzüberzug und dem Schutzmantel oder der Einsatz von zusätzlichen Rohrbandagen aus Kunststoffgaze um den Schutzmantel herum nicht lösen können. Das gilt auch für eine Ausführungsform, wonach man die Beton- oder Mörtelmischung zunächst auf die Kunststoffbandage gespritzt und diese anschließend um das Stahlrohr mit dem Korrosionsschutzüberzug herumgewickelt hat.

Im übrigen ist ein Metallrohr mit einem Schutzmantel aus Stahlbeton bekannt, der einerseits zur Beschwerung des unter Wasser zu verlegenden Metallrohres dient, andererseits unter Zwischenschaltung von bandartigen Kunststoffbeschichtungen mit Granulateinlagerungen auf dem Metallrohr befestigt ist: Bei den bandartigen Kunststoffbeschichtungen handelt es sich praktisch um einen Kunststoffkleber, der für eine Adhäsivverbindung mit dem Metallrohr sorgen soll, während die Granulateinlagerungen eine hinreichende Oberflächenrauhigkeit herbeiführen sollen, um einen mechanisch/ adhäsiven Verbund mit der Ummantelung aus Stahlbeton zu erreichen (vgl. GB 21 01 499).

Außerdem ist ein Metallrohr der eingangs beschriebenen Ausführungsform bekannt, bei welchem der Korrosionsschutzüberzug Profilierungen für einen formschlüssigen Verbund zwischen dem Korrosionsschutzüberzug und dem Schutzmantel aufweist. Im einzelnen sind zur Bildung von unregelmäßig ausgerichteten Verankerungselementen, welche über die gesamte Länge des Rohres verteilte Verhakungsmöglichkeiten bieten sollen, vor dem Erstarren oder der Polymerisation des aus Kunststoff bestehenden Korrosionsschutzüberzuges Teilchen aus Kunstharz, Sand, Sägemehl, Kügelchen aus Glas, metallischen oder synthetischen Werkstoffen aufgebracht. Derartige , in alle Richtungen weisende Verankerungselemente erlauben keine modifizierte Haftung des Schutzmantels (vgl. DE 33 11 893).

Der Erfindung liegt die Aufgabe zugrunde, ein Metallrohr, insbesondere Stahlrohr, der eingangs beschriebenen Art zu schaffen, bei dem eine einwandfreie Haftung zwischen dem Korrosionsschutzüberzug und dem Schutzmantel erreicht wird, und zwar selbst unter Berücksichtigung der beim Rohrbiegen auftretenden Materialspannungen und Rohrverformungen, so daß stets ein beschädigungsfreier und folglich optimaler Korrosionsschutz gewährleistet ist.

Diese Aufgabe löst die Erfindung bei einem gattungsgemäßen Metallrohr dadurch, daß die Profilierungen als in Rohrlängsrichtung verlaufende Rippen ausgebildet sind. - Nach Lehre der Erfindung wird also zwischen dem Kunststoff- bzw. Korrosionsschutzüberzug und dem Schutzmantel eine mechanisch funktionierende Verbundstelle geschaffen, die zu einer ausreichenden Haftung der Beton- oder Mörtelmischung und folglich des Schutzmantels auf der Rohraußenfläche bzw. dem Korrosionsschutzüberzug führt, so daß eine einwandfreie Sicherung gegen Beschädigungen erreicht wird. Überrachenderweise läßt der nach Lehre der Erfindung aufgebrachte Schutzmantel auch ohne Bandage Schlagarbeit ohne Abplatzungen und elektrische Durchschläge zu. Da sich der Schutzmantel unmittelbar im Anschluß an die Ummantelung mit dem Korrosionsschutzüberzug auf eben diesen Korrosionsschutzüberzug aufbringen läßt, wird erhöhter mechanischer Schutz aufgrund des mechanischen Verbundes schon für den Rohrtransport erreicht. Darüber hinaus ist das erfindungsgemäße Metall- bzw. Stahlrohr für den Einsatz selbst in extrem kritischen Bodensituationen geeignet.

Weitere vorteilhafte Ausgestaltungen der Erfindung sind im folgenden aufgeführt. So lehrt die Erfindung, daß die Profilierungen als T-förmige oder schwalbenschwanzförmige Rippen ausgebildet sind. Vorzugsweise sind die Profilierungen durch extrudiertes Korrosionsschutzmaterial gebildet. Nach einer anderen Ausführungsform sieht die Erfindung vor, daß die Profilierungen durch in den Korrosionsschutzüberzug eingelegte Schnüre oder ein-bzw. angeschmolzene Kunststoffschnüre gebildet sind. Stets wird ein besonders inniger Verbund schon der Profilierungen mit dem Korrosionsschutzüberzug erreicht.

Nach einem Vorschlag ist vorgesehen, daß der Schutzmantel aus der folgenden Beton- bzw. Mörtelmischung besteht:
7 % bis 75 % Gewichtsanteile Zement, vorzugsweise 13 % Portlandzement 55,
5 % bis 85 % Gewichtsanteile Betonzusatzstoff, vorzugsweise 35 % Quarzsand mit einer Körnung bis zu 0,3 mm und 33 % Quarzmehl,
1 % bis 20 % Gewichtsanteile Kunststoffdispersion, vorzugsweise 18 % Styrolbutadiendispersion,
0,05 % bis 2 % Gewichtsanteile Cellulose, vorzugsweise 0,5 % Cellulose,
0,05 % bis 5 % Gewichtsanteile Fasern, vorzugsweise 0,5 % Polypropylenfasern.

Bei dem Zement handelt es sich bevorzugt um Portlandzement. Als Betonzusatzstoff kommen außer Quarzsand und Quarzmehl auch Brechsand, Hochofenschlacke, Kalksteinmehl, Gesteinsmehl oder Elektrofilterasche in optimaler Sieblinie in Frage. Als Kunststoffanteil kann auch eine Kunststoffdispersion aus Basis Acrylat, Metacrylsäurevopolymerisat, Styrolacrylat, Polyvinylpropionat, Epoxidharz, Vinylesterversaticsäure, Polyvinylacetat, Polymerisat aus Vinyliden-Vinylchlorid, Polyäthylen-Vinylacetat, Polyäthylen-Vinyllaurat, Chloropren und Maleinsäureester eingesetzt werden. Ferner ist die Verwendung von Fasern auch auf der Basis Polyacrylnitril, Polyamid, Polyvinylchlorid, Kohlenstoff, Steinwolle, Cellulose, Asbest, Flachs, Glasfaser, Baumwollfaser und Hanffaser möglich.

Eine derartige Beton- bzw. Mörtelmischung zeichnet sich durch hohe Klebrigkeit und Standfestigkeit aus, so daß bei Applikation des Schutzmantels im Wege des Anspritzens Schichtstärken bis 20 mm möglich sind und die Beton- bzw. Mörtelmischung ohne zusätzliche Bandagen selbst mit hoher Zentrifugalbeschleunigung appliziert werden kann. Darüber hinaus zeichnet sich die erfindungsgemäße Beton- bzw. Mörtelmischung durch ein hohes Wasserrückhaltevermögen aus, so daß selbst ohne Nachbehandlung (Abdecken/Feuchthalten) auch dünnere Schutzmäntel von 2 bis 20 mm rißfrei aushärten. - Weiter lehrt die Erfindung, daß die Beton- bzw. Mörtelmischung einen Elastizitätsmodul von 9300 bis 9700 MN/m² aufweist. Tatsächlich ist bei dem nach Lehre der Erfindung aufgebrachten Schutzmantel der Elastizitätsmodul derart herabgesetzt, daß die Materialspannung bei Rohrverformungen weitgehend bereits im Gefüge aufgenommen werden und die Verbundstelle zwischen Schutzmantel und Korrosionsschutzüberzug selbst bei 4 % Biegeschritt nicht überbeansprucht wird. Darüber hinaus werden die auftretenden mechanischen Belastungen insbesondere im Zuge der Rohrverlegung gleichmäßig verteilt.

Die durch die Erfindung erreichten Vorteile. sind im wesentlichen darin zu sehen, daß ein Metallrohr, insbesondere Stahlrohr, geschaffen wird, bei dem ein mechanischer Verbund zwischen dem Korrosionsschutz aus Kunststoff und dem Schutzmantel aus einer Beton- oder Mörtelmischung erreicht wird, der sich durch optimale Haftung auszeichnet, so daß selbst die bei Rohrvertormungen auftretenden Materialspannungen einwandfrei aufgenommen werden und das erfindungsgemäße Metallrohr für den Einsatz in extrem kritischen Bodensituationen geeignet ist. Diese Eignung gilt in gleicher Weise für die freie Verlegung und die Verlegung im Offshorebereich des erfindungsgemäßen Metall- bzw. Stahlrohres.

Im folgenden wird die Erfindung anhand einer lediglich ein Ausführungsbeispiel darstellenden Zeichnung näher erläutert, es zeigt:

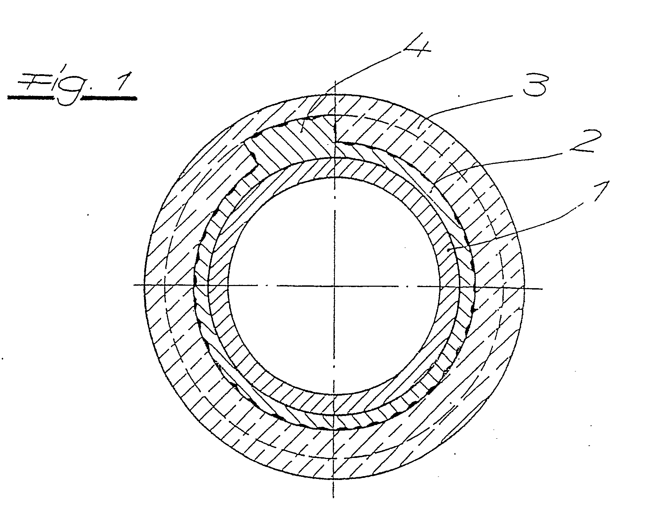

Fig. 1 ein erfindungsgemäßes Metallrohr im Radialschnitt.

In der Figur ist ein Metallrohr 1, insbesondere Stahlrohr, mit einem Korrosionsschutzüberzug 2 aus Kunststoff und einem Schutzmantel 3 dafür aus einer Beton- oder Mörtelmischung gegen mechanische Beschädigungen des Korrosionsüberzuges 2 dargestellt. Der Korrosionsschutzüberzug 2 weist Profilierungen 4 für einen kraft- und formschlüssigen Verbund zwischen dem Korrosionsschutzüberzug 2 und dem Schutzmantel 3 auf. Bei dem dargestellten Korrosionsüberzug 2 sind die Profilierungen 4 als in Rohrlängsrichtung verlaufende Rippen ausgebildet, die aus dem extrudierten Korrosionsschutzmaterial gebildet sind.

## Ansprüche

1. Metallrohr, insbesondere Stahlrohr, mit einem Korrosionsschutzüberzug aus Kunststoff und einem Schutzmantel dafür aus einer Beton- oder Mörtelmischung gegen mechanische Beschädigungen des Korrosionsschutzüberzuges, bei dem der Korrosionsschutzüberzug Profilierungen für einen formschlüssigen Verbund zwischen dem Korrosionsschutzüberzug und dem Schutzmantel aufweist, **dadurch gekennzeichnet,** daß die Profilierungen (4) als in Rohrlängsrichtung verlaufende Rippen ausgebildet sind.

2. Metallrohr nach Anspruch 1, dadurch gekennzeichnet, daß die Profilierungen (4) als T-förmige oder schwalbenschwanzförmige Rippen ausgebildet sind.

3. Metallrohr nach Anspruch 1 oder 2, dadurch gekennzeichnet, daß die Profilierungen (4) durch extrudiertes Korrosionsschutzmaterial gebildet sind.

4. Metallrohr nach Anspruch 1 oder 2, dadurch gekennzeichnet, daß die Profilierungen (4) durch in den Korrosionsschutzüberzug (2) eingelegte Schnüre oder angeschmolzene Kunststoffschnüre gebildet sind.

5. Metallrohr nach einem der Ansprüche I bis 4, dadurch gekennzeichnet, daß der Schutzmantel (3) aus der folgenden Beton- bzw. Mörtelmischung aufgebaut ist:

7 % bis 75 % Gewichtsanteile Zement, vorzugsweise 13 % Portlandzement 55,

5 % bis 85 % Gewichtsanteile Betonzusatzstoff, vorzugsweise 35 % Quarzsand mit einer Körnung bis zu 0,3 mm und 33 % Quarzmehl,

1 % bis 20 % Gewichtsanteile Kunststoffdispersion, vorzugsweise 18 % Styrolbutadiendispersion,

0,05 % bis 2 % Gewichtsanteile Cellulose, vorzugsweise 0,5 % Cellulose,

0,05 % bis 5 % Gewichtsanteile Fasern, vorzugsweise 0,5 % Polypropylenfasern.

6. Metallrohr nach einem der Ansprüche 1 bis 5, dadurch gekennzeichnet, daß die ausgehärtete Beton- bzw. Mörtelmischung einen Elastizitätsmodul von 9300 bis 9700 MN/m² aufweist.

## Claims

1. A metal pipe, particularly a steel pipe, with a corrosion protection coating of plastics and a protective jacket for the same of a concrete or mortar mixture against mechanical damage to the corrosion protection coating, in which the corrosion protection coating possesses profiles for a frictional and shape-locking combination between the corrosion protection coating and the protective jacket, characterized in that the profiles (4) are constructed as ribs extending along the length of the pipe.

2. A metal pipe according to Claim 1, characterized in that the profiles (4) are constructed as T-shaped or dovetail-shaped ribs.

3. A metal pipe according to Claim 1 or 2, characterized in that the profiles (4) are formed from extruded corrosion protection material.

4. A metal pipe according to Claim 1 or 2. characterized in that the profiles (4) are formed by cords embedded in the corrosion protection coating (2) or melted-on cords of plastics.

5. A metal pipe according to one of Claims 1 to 4, characterized in that the protective jacket (3) is constructed from the following concrete or mortar mixture:

7% to 75% by weight of cement, preferably 13% of Portland cement 55,

5% to 85% by weight of concrete additives, preferably 35% quartz sand with a grain size up to O.3mm and 33% powdered quartz.

1% to 20% by weight of plastics dispersion, preferably 18% styrene-butadiene dispersion,

0.05% to 2% by weight of cellulose, preferably 0.5% cellulose,

0.05% to 5% by weight of fibres preferably 0.5% of polypropylene fibres.

6. A metal pipe according to one of Claims 1 to 5, characterized in that the hardened concrete or mortar mixture has a modulus of elasticity of 9300 to 9700 MN/m².

## Revendications

1. Tuyau métallique, en particulier tuyau en acier, avec un revêtement anti-corrosion en matière plastique et une gaine de protection de ce revêtement, faite d'un mélange de béton ou de mortier, contre les détériorations mécaniques du revêtement anti-corrosion, dans lequel le revêtement anti-corrosion présente des profilages pour solidariser par emboîtement mutuel le revêtement anti-corrosion et la gaine de protection, **caractérisé** en ce que les profilages (4) sont sous la forme de cannelures qui s'étendent dans le sens longitudinal du tuyau.

2. Tuyau métallique selon la revendication 1, caractérisé en ce que les profilages (4) sont sous la forme de cannelures profilées en T ou en col de cygne.

3. Tuyau métallique selon la revendication 1 ou 2, caractérisé en ce que les profilages (4) sont formés de matière protectrice anti-corrosion extrudée.

4. Tuyau métallique selon la revendication 1 ou 2, caractérisé en ce que les profilages (4) sont constitués par des cordons noyés dans le revêtement anti-corrosion (2) ou par des cordons en matière plastique appliqués par fusion.

5. Tuyau métallique selon une des revendications 1 à 4, caractérisé en ce que la gaine de protection (3) est constituée d'un mélange de béton ou de mortier comprenant :
   - 7% à 75% en poids de ciment, de préférence 13% de ciment Portland 55;
   - 5% à 85% en poids d'additifs du béton, de préférence 35% de sable quartzeux de granulométrie allant jusqu'à 0,3mm et 33% de poudre de quartz broyée;
   - 1% à 20% en poids d'une dispersion de matière plastique, de préférence 18% d'une dispersion de styrol-butadiène;
   - 0,05% à 2% en poids de cellulose, de préférence 0,5% de cellulose;
   - 0,05% à 5% en poids de fibres, de préférence 0,5% de fibres de polypropylène.

6. Tuyau métallique selon une des revendications 1 à 5, caractérisé en ce que le mélange de béton ou de mortier présente, après durcissement, un module d'élasticité de 9300 à 9700 $MN/m^2$.

Fig. 1